# EUROPÄISCHE PATENTANMELDUNG

(11) **EP 1 708 137 A2**
(43) Veröffentlichungstag der Anmeldung: **04.10.2006**
(21) Anmeldenummer: 06100630.0
(22) Anmeldetag: 20.01.2006
(51) Int. Cl.: G06T 3/00

(54) **Verfahren zur vertikalen Ausrichtung eines auf einem Bild dargestellten Gesichts**

(30) Priorität: 31.03.2005 DE 10514773
(71) Anmelder: SIEMENS AKTIENGESELLSCHAFT, 80333 München (DE)
(72) Erfinder: Guitarte Perez, Jesus Fernando, 80335 München (DE); Harengel, Steffen, 80689 München (DE); Lucas, Carlos, 81549 München (DE); Lukas, Klaus, 81739 München (DE)

(57) **Zusammenfassung**

Eine weit verbreitete Funktion in mobilen oder stationären Kommunikationsendgeräten ist das Aufnehmen von Bildern anhand von in den mobilen Kommunikationsendgeräten integrierten Kameras. Je nach Situation werden die Bilder quer oder gerade aufgenommen, aber auch andere Bildorientierungen kommen vor. Die aufgenommenen Bilder können auf kleinen Bildschirmen direkt angezeigt werden oder von weiteren Anwendungen verwendet werden. Nachteilig hierbei ist oft, dass ein Benutzer das mobile Kommunikationsendgerät bei verdreht aufgenommenen Bildern drehen muss, um das Gesicht in der richtigen Position betrachten zu können. Darüber hinaus sind Gesichtsanimationen mit aufgenommenen Bildern äußerst schwierig, wenn die auf den Bildern dargestellten Gesichter nicht in vertikal ausgerichteten Positionen vorliegen. Zur Lösung dieses Problems wird ein Verfahren vorgeschlagen, welches über eine Anwendung eines Gesichtslokalisationsverfahrens eine optimierte Ausrichtung des Bildes ermittelt.

## Beschreibung

Die vorliegende Erfindung betrifft ein Verfahren und ein Computerprogrammprodukt zur vertikalen Ausrichtung eines auf einem Bild dargestellten Gesichts.

Eine weit verbreitete Funktion in mobilen oder stationären Kommunikationsendgeräten ist mittlerweile das Aufnehmen von Bildern anhand von in den mobilen Kommunikationsendgeräten integrierten Kameras. Je nach Situation werden die Bilder quer oder gerade aufgenommen, aber auch andere Bildorientierungen kommen vor. Die aufgenommenen Bilder können auf kleinen Bildschirmen direkt angezeigt werden oder von weiteren Anwendungen verwendet werden.

Eine solche Anwendung für mobile oder stationäre Kommunikationsendgeräte ist, bei einem eingehenden Anruf ein Bild, insbesondere ein Porträt, des entsprechenden Anrufers auf einer Bedienanzeige des Kommunikationsendgerätes darzustellen. Neben einem Bild des Anrufers, werden üblicherweise noch der Name und die Telefonnummer des Anrufers angezeigt. Diese so genannten Calling Faces" erweitern den multimedialen Charakter von Kommunikationsendgeräten auf eine besonders benutzerfreundliche Weise, da sie es einem Benutzer ermöglichen auf den ersten Blick zu erkennen, wer gerade anruft. Zudem wird eine weitere Personalisierung von Kommunikationsendgeräten durch diese Funktion erreicht, welches als ein Schlüsselfaktor zum Erfolg in der Kommunikationsbranche angesehen wird.

Eine weitere interessante Anwendung für mobile oder stationäre Kommunikationsendgeräte stellt das so genannte "SMS Reading" dar, wobei eine Textmeldung bei gleichzeitiger Anzeige eines gesichtsanimierten Bildes des Verfassers der Textmeldung durch ein Sprachsynthesesystem vorgelesen wird.

Nachteilig bei den oben beschriebenen Verfahren ist, dass ein Benutzer das mobile Kommunikationsendgerät bei verdreht aufgenommenen Bildern drehen muss, um das Gesicht in der richtigen Position betrachten zu können. Darüber hinaus sind Gesichtsanimationen mit aufgenommenen Bildern äußerst schwierig, wenn die auf den Bildern dargestellten Gesichter nicht in vertikal ausgerichteten Positionen vorliegen.

Derzeit muss das Drehen der verdreht aufgenommenen Bilder in die richtige Position manuell durchgeführt werden, beispielsweise wird das Bild in einem Darstellungsprogramm in 90°- Schritten solange rotiert, bis der Benutzer die richtige Position gefunden hat. Eine andere Möglichkeit ist, das mobile Kommunikationsendgerät mit einem Orientierungssensor zu versehen. Die Informationen des Orientierungssensors werden bei der Aufnahme eines Bildes mitgespeichert und später dazu benutzt, das Bild in der richtigen Position darzustellen. Der hierzu benötigte gyroskopische Sensor ist teuer und wird daher in mobilen Kommunikationsendgeräten nicht verbaut.

Somit liegt der vorliegenden Erfindung die Aufgabe zugrunde, ein Verfahren anzugeben, durch welches die vertikale Ausrichtung eines auf einem Bild dargestellten Gesichts automatisch vorgenommen wird.

Erfindungsgemäß wird diese Aufgabe durch ein Verfahren und ein Computerprogrammprodukt mit den in Anspruch 1 und Anspruch 10 angegebenen Merkmalen gelöst. Vorteilhafte Weiterbildungen der vorliegenden Erfindung sind in den abhängigen Ansprüchen angegeben.

Entsprechend der vorliegenden Erfindung werden in einem Verfahren zur Ausrichtung eines ein Gesicht darstellenden Bildes das Bild in Schritten mit vorgebbaren Rotationswinkeln um insgesamt 360° um eine mittig angeordnete Bildflächennormale gedreht. Für einen Rotationsschritt wird jeweils ein Gütewert eines Gesichtslokalisationsalgorithmus ermittelt, der auf das um den jeweiligen Rotationswinkel rotierte Bild angewendet wird. Anhand der Gütewerte wird eine optimierte Ausrichtung des Bildes ermittelt.

Gesichtslokalisationsverfahren sind funktional den Bildanalyseverfahren zuzuordnen. Bildanalyseverfahren sind beispielsweise ohne Beschränkung der Allgemeinheit dieses Begriffs Verfahren zur Mustererkennung bzw. zur Detektion von Objekten in einem Bild. Üblicherweise wird bei diesen Verfahren in einem ersten Schritt eine Segmentierung vorgenommen, bei dem eine Zuordnung von Bildpunkten zu einem Objekt erfolgt. In einem zweiten Schritt wird anhand morphologischer Verfahren die Gestalt und/oder die Form der Objekte identifiziert. Letztlich werden in einem dritten Schritt zur Klassifizierung die identifizierten Objekte bestimmten Klassen zugewiesen. Ein weiterer typischer Vertreter eines Bildanalyseverfahrens ist beispielsweise die Handschriftenerkennung.

Gemäß einer vorteilhaften Ausgestaltung der vorliegenden Erfindung betragen die vorgebbaren Rotationswinkel jeweils 90°. Dies hat die vorteilhafte Wirkung, dass bei der Rotation des Bildes keine fehlenden Ecken entstehen, die zusätzlich ermittelt werden müssten.

Gemäß einer bevorzugten Ausführungsvariante der vorliegenden Erfindung wird eine Maske des Gesichtslokalisationsalgorithmus über eine Rotationsmatrix um den jeweils vorgegebenen Rotationswinkel mathematisch gedreht. Anhand der gedrehten Maske wird der Gütewert des auf das Bild angewendeten Gesichtslokalisationsalgorithmus für den jeweiligen Rotationswinkel ermittelt. Anhand der Gütewerte wird eine optimierte Ausrichtung des Bildes ermittelt und das Bild ist um den ermittelten Rotationswinkel gedreht darstellbar. Dies hat die vorteilhafte Wirkung, dass nicht mehr das Bild rotiert werden muss, sondern nur noch die Maske des Gesichtslokalisationsalgorithmus. Die Rotation der Maske mit typischerweise 9 oder 25 Elementen ist wesentlich weniger rechenintensiv als das Rotieren eines kompletten Bildes mit ungefähr 480 000 Bildpunkten.

Eine weitere Reduzierung der erforderlichen Rechenleistung und des benötigten Speicherplatzes wird dadurch erreicht, dass zur Ermittlung der Gütewerte des Gesichtslokalisationsalgorithmus erforderliche Bildpunkte einmal ausgelesen werden und die rotierten Masken auf die ausgelesenen Bildpunkte angewendet werden. Somit werden die erforderlichen Bildpunkte nur einmal ausgelesen und anschließend für die Ermittlung der Gütewerte durch die einzelnen Masken oder durch eine Maske herangezogen, die Eigenschaften der einzelnen rotierten Masken vereint. Durch die Verwendung von symmetrischen Masken kann weitere Rechenleistung eingespart werden, da bei ihrer Anwendung in einem Ermittlungsdurchgang die Gütewerte für mehrere Rotationswinkel ermittelt werden.

Gemäß einer weiteren vorteilhaften Ausgestaltung der vorliegenden Erfindung erfolgt eine gradgenaue Ermittlung der optimierten Ausrichtung eines Bildes anhand einer relativen Position von Gesichtsmerkmalen, insbesondere Augenbrauen oder Mund, zu Achsen eines Koordinatensystems des Bildes.
Durch die gradgenaue Ausrichtung wird die vorteilhafte Wirkung erzielt, dass unabhängig von den vorgebbaren Rotationswinkeln die Möglichkeit einer exakten Ausrichtung des ein Gesicht darstellenden Bildes zur Verfügung steht. So besteht beispielsweise die Möglichkeit nach einer ersten Ausrichtung des Bildes gemäß Anspruch 1 in einem weiteren Schritt eine noch exaktere, gradgenaue Ausrichtung vorzunehmen.

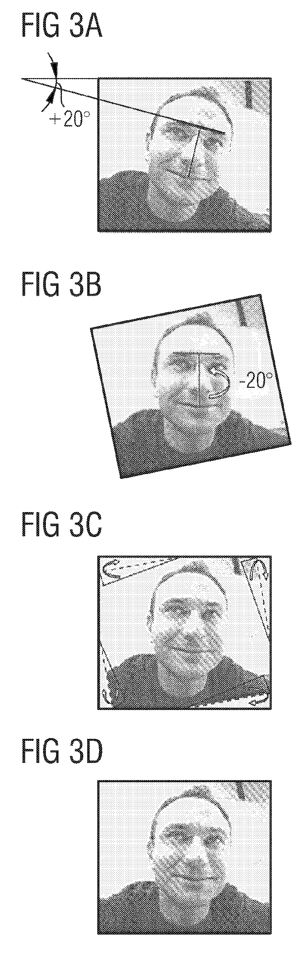

Gemäß einer vorteilhaften Weiterentwicklung der vorliegenden Erfindung werden bei einer Rotation des Bildes um einen nicht rechtwinkligen Rotationswinkel entstehende, fehlende Bildecken über eine Spiegelung entlang einer Bildkante der fehlenden Bildecke ermittelt. Solche fehlenden Bildecken entstehen beispielsweise bei einer Rotation des Bildes um 20°, wobei das Bild anschließend in den ursprünglichen Bildrahmen eingepasst werden soll (siehe auch Figur 3). Durch die vorgeschlagene Weiterentwicklung steht ein einfaches und schnelles Verfahren zur Verfügung diese fehlenden Ecken wieder aufzufüllen.

Gemäß weiteren Ausgestaltungen der vorliegenden Erfindung werden die Informationen über die optimierte Ausrichtung des Bildes in dem Bild gespeichert, beispielsweise in einem Header eines JPEG-Bildes, oder dem Bild zugeordnet, so dass die Informationen bei Bedarf schnell zugreifbar sind. Alternativ wird das optimal ausgerichtete Bild gespeichert.

Bei der Ausführung des erfindungsgemäßen Computerprogrammprodukts wird durch die Programmablaufsteuerungseinrichtung zur Ausrichtung eines ein Gesicht darstellenden Bildes das Bild in Schritten mit vorgebbaren Rotationswinkeln um insgesamt 360° um eine mittig angeordnete Bildflächennormale gedreht. Für einen Rotationsschritt wird jeweils ein Gütewert eines Gesichtslokalisationsalgorithmus ermittelt, der auf das um den jeweiligen Rotationswinkel rotierte Bild angewendet wird. Anhand der Gütewerte wird eine optimierte Ausrichtung des Bildes ermittelt.

Die vorliegende Erfindung wird nachfolgend an einem Ausführungsbeispiel anhand der Zeichnungen näher erläutert. Es zeigen
- Figur 1: eine schematische Darstellung eines Gesichts mit durch einen Gesichtslokalisationsalgorithmus lokalisierten Gesichtsmerkmalen,
- Figur 2: eine schematische Darstellung eines Gesichts in jeweils um 90° gegen den Uhrzeigersinn rotierten Positionen,
- Figur 3: eine Fotografie eines Gesichts, welches auf Basis der Gesichtsgeometrie um 20° gegen den Uhrzeigersinn gedreht und dessen Ecken mit bestehendem Bildmaterial aufgefüllt wurden.

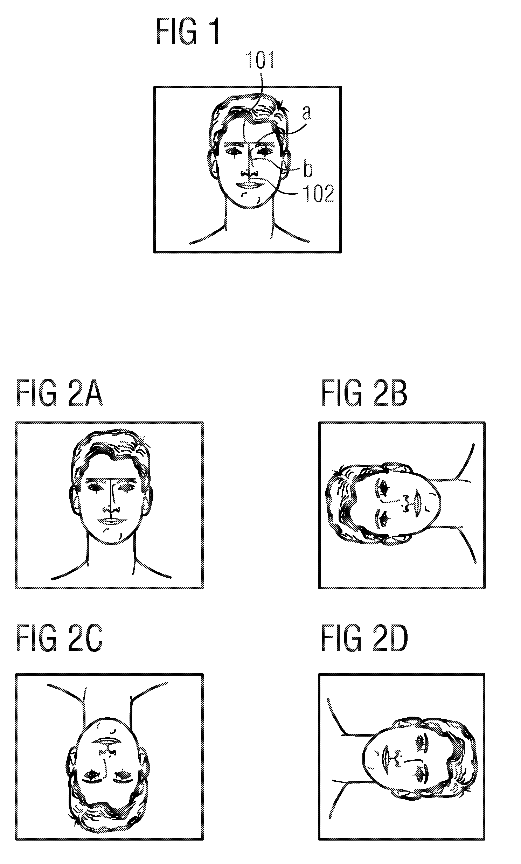

Die Figur 1 zeigt eine schematische Darstellung eines Gesichts, in welchem durch einen Gesichtslokalisationsalgorithmus die Augenbrauen 101 und der Abstand von den Augenbrauen zum Mund 102 identifiziert wurde. Bei einem Verhältnis des Abstandes der Augenbrauen voneinander a und des Abstandes von den Augenbrauen zum Mund b von ungefähr a/b=1:2, wird durch den Gesichtslokalisationsalgorithmus ein Gesicht erkannt. Diese geometrischen Bedingungen können durch den Gesichtslokalisationsalgorithmus nur bei der richtigen Orientierung des Bildes erkannt werden.

Ein geometrisches Verfahren zum Analysieren eines Bildes, um das Vorhandensein und die Position eines Gesichts zu bestimmen, umfasst zunächst ein Festlegen von Segmenten in dem erfassten Bild, die helligkeitsspezifische Merkmale aufweisen. Die helligkeitsspezifischen Merkmale können beispielsweise Hell-Dunkel-Übergänge und/oder Dunkel-Hell-Übergänge umfassen. Anschließend wird eine positionsmäßige Beziehung der festgelegten Segmente zueinander überprüft, wobei ein Vorhandensein eines (menschlichen) Gesichts, insbesondere an einer bestimmten Position in dem erfassten Bild, abgeleitet wird, wenn eine Auswahl von festgelegten Segmenten eine bestimmte positionsmäßige Beziehung aufweist. Das bedeutet, durch das gerade beschriebene Verfahren kann durch Analyse bestimmter Bereiche des erfassten Bildes, nämlich der Segmente mit helligkeitsspezifischen Merkmalen, genauer gesagt durch Überprüfen der positionsmäßigen Beziehung der festgelegten Segmente auf das Vorhandensein eines Gesichts, insbesondere menschlichen Gesichts, geschlossen werden.
Insbesondere werden Segmente in dem erfassten Bild festgelegt, bei denen die helligkeitsspezifischen Merkmale scharfe bzw. abrupte Helligkeitsübergänge, beispielsweise von Dunkel nach Hell oder von Hell nach Dunkel aufweisen. Derartige (scharfe) Helligkeitsübergänge finden sich beispielsweise in einem Gesicht eines Menschen, insbesondere beim Übergang von der Stirn zu den Augenbrauen oder (bei Menschen mit heller Haarfarbe) beim Übergang von der Stirn in den Schatten der Augenhöhlen. Derartige (scharfe) Helligkeitsübergänge finden sich jedoch auch beim Übergang von dem Oberlippenbereich bzw. Lippenbereich zur Mundöffnung oder von der Mundöffnung zum Lippenbereich der Unterlippe bzw. zum Unterlippenbereich. Ein weiterer Helligkeitsübergang stellt sich zwischen der Unterlippe und dem Kinnbereich, genauer gesagt als Schattenbereich (je nach Lichtverhältnis bzw. Lichteinfall) basierend auf einer leichten Vorwölbung der Unterlippe, ein. Durch eine Vorverarbeitung des Bilds mittels eines Gradientenfilters können (scharfe) Helligkeitsübergänge, wie die an den Augenbrauen, an den Augen, oder an dem Mund besonders hervorgehoben und sichtbar gemacht werden.
Zum Überprüfen der positionsmäßigen Beziehung der ermittelten Segmente wird beispielsweise in einem ersten Untersuchungsschritt jedes der festgelegten Segmente dahingehend untersucht, ob zu einem zu untersuchenden Segment ein zweites festgelegtes Segment existiert, das auf einer horizontalen Linie bzw. einer im Wesentlichen horizontal verlaufenden Linie zu dem gerade untersuchten festgelegten Segment liegt. Ausgehend von einem erfassten Bild, bestehend aus einer Mehrzahl von Bildpunkten muss das zweite Segment nicht unbedingt auf einer der von dem zu untersuchenden Segment umfassten waagerechten Linie an Bildpunkten liegen, es kann auch um einen vorbestimmten kleinen Betrag an Bildpunkten höher oder tiefer bezüglich der waagerechten oder horizontalen Linie liegen. Wird ein zweites festgelegtes horizontales Segment gefunden, so wird nach einem dritten festgelegten Segment gesucht, das sich unterhalb des untersuchten und des zweiten festgelegten Segments befindet und für das gilt, dass ein Abstand von dem untersuchten zu dem zweiten festgelegten Segment und ein Abstand einer Verbindungsstrecke zwischen dem untersuchten und dem zweiten festgelegten Segment zu dem dritten festgelegten Segment ein erstes vorbestimmtes Verhältnis aufweist. Insbesondere kann eine Normale zu der Verbindungsstrecke zwischen dem untersuchten und dem zweiten festgelegten Segment definiert werden, wobei der Abstand von dem dritten Segment (entlang der Normalen) zu der Verbindungsstrecke zwischen dem untersuchten und dem zweiten festgelegten Segment in das erste vorbestimmte Verhältnis eingeht. Durch den gerade beschriebenen ersten Untersuchungsschritt kann somit auf das Vorhandensein eines Gesichts geschlossen werden, indem die positionsmäßige Beziehung zwischen drei festgelegten Segmenten ermittelt wird. Hierbei wird davon ausgegangen, dass das untersuchte und das zweite festgelegte Segment einen jeweiligen Augenbrauenabschnitt im Gesicht eines Menschen darstellt, der normalerweise einen markanten bzw. scharfen Hell-Dunkel-Helligkeitsübergang von oben nach unten aufweist und somit gut erkennbar ist. Das dritte festgelegte Segment stellt ein Segment einer Mundpartie bzw. den zwischen Oberlippe und Unterlippe Schatten bildenden Grenzbereich dar. Neben der Möglichkeit, Augenbrauen als markante Segmente mit helligkeitsspezifischen Merkmalen zu verwenden, ist es auch möglich, an Stelle der Augenbrauen Schatten bildende Bereiche der Augenhöhlen bzw. die Augen oder die Iris selbst zu verwenden. Das Verfahren ist beliebig erweiterbar auf zusätzliche zu untersuchende Segmente, die beispielsweise eine Erkennung einer Brille oder zusätzliche verifizierende Merkmale (Nase, geöffnete Mundpartie) einschließen.

Nach einem ersten Ausführungsbeispiel wird ein Gesichtslokalisationsalgorithmus jeweils auf ein um 90° gegen den Uhrzeigersinn rotiertes Bild angewendet. Die Figur 2 zeigt ein Bild mit einer schematischen Darstellung eines Gesichts in der vertikalen Ausrichtung des Gesichts a) und den jeweils um 90° gegen den Uhrzeigersinn gedrehten Bildern des Gesichts b) bis d). Nach einer Anwendung des Gesichtslokalisationsalgorithmus auf alle Bilder der Figur 2 a) bis d), erhält das Bild a) den höchsten Gütewert und wird somit als das Bild mit der vertikalen Ausrichtung des dargestellten Gesichts erkannt.

Es liegt im Ermessen eines Fachmannes, das Verfahren nach der Anwendung des Gesichtslokalisationsalgorithmus auf das Bild a) abzubrechen, da hiernach schon das korrekte Bild ermittelt wurde. Dies kann beispielsweise über einen empirisch ermittelten Schwellwert für den Gütewert festgestellt werden, nach dessen Überschreiten eine korrekte Ausrichtung eines Bildes als gesichert gilt.

Die Information über die richtige Orientierung des Bildes kann nun als zusätzliche Bildinformation abgespeichert werden, wie beispielsweise in einem JPEG-Header des Bildes. Die Information kann auch als zuordnenbare Information zu dem Bild getrennt abgespeichert werden. Auch ist es möglich, das Bild in der korrekt ausgerichteten Position abzuspeichern.

Nach einem weiteren Ausführungsbeispiel erfolgt nach einer vertikalen Ausrichtung des auf einem Bild dargestellten Gesichts wie in Figur 2, zusätzlich noch eine gradgenaue Ausrichtung des abgebildeten Gesichts. Die Figur 3 zeigt eine Fotografie eines Gesichts, welches auf Basis der Gesichtsgeometrie um 20° gegen den Uhrzeigersinn in die gradgenaue vertikale Position des Gesichts gedreht und dessen hierbei entstandene fehlende Ecken mit bestehendem Bildmaterial aufgefüllt wurden.

Zunächst wird anhand des Gesichtslokalisationsalgorithmus die relative Position von Gesichtsmerkmalen zu den Achsen des Bildes ermittelt. In Figur 3 a) sind die durch den Gesichtslokalisationsalgorithmus erkannten Gesichtsmerkmale Augebrauen und Abstand von den Augenbrauen zum Mund kenntlich gemacht. Wie in Figur 3 a) dargestellt, kann die relative Position beispielsweise der Augenbrauen zu der oberen horizontalen Bildachse leicht ermittelt werden. Figur 3 b) zeigt die anschließende Rotation des Bildes um eine mittig angeordnete Bildflächennormale um -20°, um das auf dem Bild dargestellte Gesicht in die gradgenaue vertikale Position zu auszurichten. Die dabei entstandenen fehlenden Bildecken werden, wie in Figur 3 c) gezeigt, durch die entlang der Bildkantenachse gespiegelte Bildflächen aufgefüllt. Das nach Beendigung des Verfahrens erhaltene Bild mit der korrigierten Position des fotografierten Gesichts ist in Figur 3 d) abgebildet.

Die Anwendung der vorliegenden Erfindung ist nicht auf die beschriebenen Ausführungsbeispiele beschränkt.

## Patentansprüche

1. Verfahren zur Ausrichtung eines ein Gesicht darstellenden Bildes, bei dem
- das Bild in Schritten mit vorgebbaren Rotationswinkeln um insgesamt 360° um eine mittig angeordnete Bildflächennormale gedreht wird,
- für einen Rotationsschritt jeweils ein Gütewert eines Gesichtslokalisationsalgorithmus ermittelt wird, der auf das um den jeweiligen Rotationswinkel rotierte Bild angewendet wird,
- anhand der Gütewerte eine optimierte Ausrichtung des Bildes ermittelt wird.

2. Verfahren nach Anspruch 1, wobei
die vorgebbaren Rotationswinkel jeweils 90° betragen.

3. Verfahren nach einem der vorhergehenden Ansprüche, wobei
- eine Maske des Gesichtslokalisationsalgorithmus über eine Rotationsmatrix um den jeweils vorgegebenen Rotationswinkel mathematisch gedreht wird,
- anhand der gedrehten Maske der Gütewert des auf das Bild angewendeten Gesichtslokalisationsalgorithmus für den jeweiligen Rotationswinkel ermittelt wird,
- anhand der Gütewerte eine optimierte Ausrichtung des Bildes ermittelt wird und das Bild um den ermittelten Rotationswinkel gedreht darstellbar ist.

4. Verfahren nach Anspruch 3, wobei
zur Ermittlung der Gütewerte des Gesichtslokalisationsalgorithmus erforderliche Bildpunkte einmal ausgelesen werden und die rotierten Masken auf die ausgelesenen Bildpunkte angewendet werden.

5. Verfahren nach einem der vorhergehenden Ansprüche, wobei das Verfahren beendet wird, wenn die optimierte Ausrichtung des Bildes ermittelt ist.

6. Verfahren nach einem der vorhergehenden Ansprüche, wobei eine gradgenaue Ermittlung der optimierten Ausrichtung des Bildes anhand einer relativen Position von Gesichtsmerkmalen, insbesondere Augenbrauen oder Mund, zu Achsen eines Koordinatensystems des Bildes erfolgt.

7. Verfahren nach einem der vorhergehenden Ansprüche, wobei bei einer Rotation des Bildes um einen nicht rechtwinkligen Rotationswinkel entstehende, fehlende Bildecken über eine Spiegelung entlang einer Bildkante der fehlenden Bildecke ermittelt werden.

8. Verfahren nach einem der vorhergehenden Ansprüche, wobei Informationen über die optimierte Ausrichtung des Bildes gespeichert werden.

9. Verfahren nach einem der vorhergehenden Ansprüche, wobei Informationen über die optimierte Ausrichtung des Bildes dem Bild zugeordnet werden.

10. Verfahren nach einem der vorhergehenden Ansprüche, wobei das optimal ausgerichtete Bild gespeichert wird.

11. Computerprogrammprodukt, das in einen Arbeitsspeicher einer Programmablaufsteuerungseinrichtung ladbar ist und zumindest einen Codeabschnitt aufweist, bei dessen Ausführung zur Ausrichtung eines ein Gesicht darstellenden Bildes
- das Bild in Schritten mit vorgebbaren Rotationswinkeln um insgesamt 360° um eine mittig angeordnete Bildflächennormale gedreht wird,
- für einen Rotationsschritt jeweils ein Gütewert eines Gesichtslokalisationsalgorithmus ermittelt wird, der auf das um den jeweiligen Rotationswinkel rotierte Bild angewendet wird,
- anhand der Gütewerte eine optimierte Ausrichtung des Bildes ermittelt wird,
wenn das Computerprogrammprodukt in der Programmablaufsteuerungseinrichtung abläuft.
